# EUROPÄISCHE PATENTSCHRIFT

(11) **EP 2 870 387 B1**
(45) Veröffentlichungstag und Bekanntmachung des Hinweises auf die Patenterteilung: **25.03.2020**
(21) Anmeldenummer: 13733957.8
(22) Anmeldetag: 03.07.2013
(51) Int. Cl.: F16H 63/34

(54) **STELLVORRICHTUNG FÜR EINE PARKSPERRENBETÄTIGUNG**
ACTUATOR FOR ACTIVATING A PARKING LOCK
DISPOSITIF DE COMMANDE DE L'ACTIONNEMENT D'UN VERROU DE STATIONNEMENT

(30) Priorität: 04.07.2012 DE 102012013373
(43) Veröffentlichungstag der Anmeldung: 13.05.2015
(73) Patentinhaber: Audi AG, 85045 Ingolstadt (DE)
(72) Erfinder: SCHULLER, Dietmar, 93336 Altmannstein (DE); AMMLER, Stefan, 86673 Bergheim (DE)
(74) Vertreter: Wohnert, Dietmar
(86) Internationale Anmeldenummer: PCT/EP2013/001948
(87) Internationale Veröffentlichungsnummer: WO 2014/005702

(56) Entgegenhaltungen:
- EP-A1- 2 458 226
- EP-A2- 1 855 033
- DE-A1-102008 011 898
- US-A- 5 048 656

## Beschreibung

Die vorliegende Erfindung betrifft eine Stellvorrichtung für eine Betätigung einer Parksperre in einem Getriebe, insbesondere für automatische Getriebe in Kraftfahrzeugen, gemäß dem Oberbegriff des Patentanspruchs 1.

Eine Stellvorrichtung der gattungsgemäßen Art beschreibt die EP 2 458 226 A1 sowie die DE 198 34 156 A1, die bei einer shift by wire Getriebesteuerung eingesetzt ist und neben der hydraulisch gesteuerten Auslegung der Parksperre eine elektromagnetische Sperreinrichtung aufweist, die zum Beispiel bei einem Ausfall des Hydrauliksystems ein "Einfallen" der Parksperre ausschließt. Die Sperreinrichtung verriegelt dabei über radial ausfahrbare Sperrelemente den Kolben der Stellvorrichtung zu einer an dem Zylinder befestigten Führungshülse.

Aufgabe der Erfindung ist es, eine Stellvorrichtung der gattungsgemäßen Art mit baulich einfachen Mitteln hinsichtlich ihrer Funktionseigenschaften und Konstruktionsmerkmale weiter zu verbessern.
Die Lösung dieser Aufgabe ist in den kennzeichnenden Merkmalen des Patentanspruchs 1 angeführt. Vorteilhafte und besonders zweckmäßige Weiterbildungen der Erfindung sind Gegenstand der Unteransprüche.
Erfindungsgemäß wird vorgeschlagen, dass über die Sperreinrichtung der Kolben auch in der dem eingelegten Zustand der Parksperre entsprechenden Stellung formschlüssig festlegbar ist. Die Sperreinrichtung wirkt demzufolge nicht nur in der ausgelegten Position der Parksperre, sondern auch in der eingelegten Position, wodurch bei zumindest temporär bestromten Elektromagneten die Parksperre formschlüssig gegen ein unbeabsichtigtes Lösen, zum Beispiel durch einen Defekt in einem hydraulischen Steuerventil oder einem anderen Systemfehler, mit einfachen Mitteln abgesichert ist.

Erfindungsgemäß weist der Kolben einen hülsenförmigen Abschnitt auf und ist die Sperreinrichtung mit dem Elektromagneten und der Führungshülse innerhalb des hülsenförmigen Abschnitts angeordnet. Durch diese Maßnahme kann die Baulänge der Stellvorrichtung wesentlich verkürzt werden und trotzdem die beiden Sperrfunktionen über die Sperrelemente ausüben.

Ferner sind in dem hülsenförmigen Abschnitt des Kolbens zwei den Kolbenendstellungen entsprechende Innennuten eingearbeitet, in die die Sperrelemente durch die Führungshülse hindurch bei bestromtem Elektromagneten formschlüssig einfahren. Die Sperrelemente können dabei Kugeln sein, die über ein einen Konusabschnitt aufweisendes und innerhalb der Führungshülse geführtes Druckstück betätigbar sind, wobei ein Stößel des Elektromagneten das Druckstück beaufschlagt. Ferner kann das Druckstück gegenüberliegend dem Stößel des Elektromagneten durch eine Schraubendruckfeder beaufschlagt sein. Daraus resultiert eine baulich vorteilhafte, in sich verschachtelte Konstruktion mit optimaler Ausnutzung des Bauraums innerhalb des hülsenförmigen Abschnitts des Kolbens der Stellvorrichtung.
Des Weiteren kann der die Schraubendruckfeder aufnehmende Führungsabschnitt des Druckstücks im betätigten Zustand an einer Stirnwand der Führungshülse anliegen, wobei in diesem Zustand die Kugeln an einem zylindrischen Endabschnitt des Druckstücks abgestützt sind. Die Kugeln der Sperreinrichtung können somit bei gegebenenfalls auf den Kolben wirkenden Störkräften kein Rückstellmoment am Druckstück bzw. auf den Elektromagneten ausüben. Die Sperre bleibt zuverlässig wirksam.

Besonders zweckmäßig und montagegünstig können die Führungshülse und das Gehäuse des Elektromagneten mittels mehrerer Schrauben an der freien Stirnseite des Zylinders befestigt sein.

Gemäß einer weiteren, sehr vorteilhaften Ausgestaltung der Erfindung kann die die Parksperre einlegende Vorspannfeder zwischen einer Stirnwand der Führungshülse und einer Stirnwand des hülsenförmigen Abschnitts des Kolbens angeordnet sein. Damit ist eine alle Funktionsteile einschließlich der Vorspannfeder enthaltende Stellvorrichtung geschaffen, die insbesondere als Montageeinheit einfach in das Getriebe des Kraftfahrzeugs einbaubar ist.

Ein Ausführungsbeispiel der Erfindung ist anhand der beigefügten, schematischen Zeichnung näher erläutert, die einen Längsschnitt durch eine Stellvorrichtung für eine Parksperrenbetätigung für ein automatisches Getriebe von Kraftfahrzeugen zeigt.

Die dargestellte Stellvorrichtung 10 ist in ein Getriebegehäuse (nicht dargestellt) eines automatischen Getriebes für Kraftfahrzeuge einsetzbar und weist eine nur teilweise ersichtliche Stellstange 12 auf, die mit einer Sperrklinke verbindbar ist. Die Sperrklinke bildet im Zusammenwirken mit einem Sperrzahnrad eine vielfach bekannte Parksperre P innerhalb des Getriebes.

Das Einlegen "P ein" und Auslegen "P aus" der Parksperre ist im shift by wire System über die Stellvorrichtung 10 gesteuert, das heißt, dass zwischen dem Wählhebel des automatischen Getriebes und der Sperrklinke der Parksperre keine mechanische Verbindung vorliegt, sondern elektrohydraulisch durch Steuerungsparameter wie Fahrzeugstillstand, willkürlicher Parkbefehl, etc. bewirkt wird.

Die Stellvorrichtung 10 setzt sich im Wesentlichen zusammen aus einem in einem Zylinder 14 axial verschiebbaren Kolben 16, einer Führungshülse 18, einer Sperreinrichtung 20 und einem die Sperreinrichtung 20 betätigenden Elektromagneten 22.

Der Kolben 16 ist über Dichtungsringe 24 in dem Zylinder 14 flüssigkeitsdicht angeordnet und mit der Stellstange 12 entweder einstückig ausgeführt (wie dargestellt) oder fest mit dieser verbunden. Die Stellstange 12 ist über einen weiteren Dichtungsring 24 nach außen abgedichtet und über die Führungen (Kolbenringe) 39 geführt.

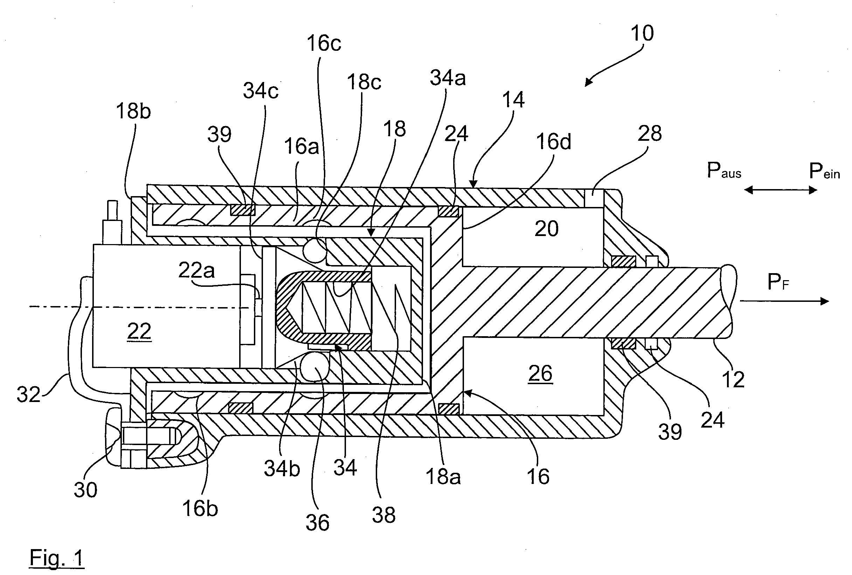

Der Kolben 16 schließt mit dem Zylinder 14 einen Zylinderraum 26 ein, der über einen Anschluss 28 an ein nicht dargestelltes Hydrauliksystem zur Betätigung des Kolbens 16 auf der Zeichnung nach links (P aus) mit Hydraulikdruck beaufschlagbar ist.

Über eine im Ausführungsbeispiel nicht dargestellte Vorspannfeder wird die Stellstange 12 oder direkt die nicht dargestellte Sperrklinke der Parksperre in entgegengesetzter Richtung (P ein) ständig mit einer Kraft P_{F} vorgespannt, so dass bei nicht vorliegendem Hydraulikdruck die Parksperre automatisch eingelegt wird.

Der Kolben 16 weist einen hülsenförmigen Abschnitt 16a auf, in den die einerseits über eine Stirnwand 18a geschlossene Führungshülse 18 und der Elektromagnet 22 sowie die Sperreinrichtung 20 eingesetzt sind.

Die Führungshülse 18 ist mit ihrem Befestigungsflansch 18b mittels einer oder mehrerer Schrauben 30 (es ist nur eine Schraube 30 ersichtlich) befestigt, die zugleich über einen Haltebügel 32 den Elektromagneten 22 spielfrei halten.

Der bei Bestromung des Elektromagneten 22 ausfahrbare Stößel 22a wirkt auf ein Druckstück 34 der Sperreinrichtung 20, das über einen zylindrischen, hohlen Führungsabschnitt 34a in der Führungshülse 18 axial verschiebbar geführt ist.

Das Druckstück 34 weist ferner einen Konusabschnitt 34b auf, der mit in korrespondierenden Durchbrüchen 18c der Führungshülse 18 eingesetzten Kugeln 36 als radial ausfahrbare Sperrelemente zusammenwirkt. Der Konusabschnitt 34b des Druckstücks 34 geht schließlich in einen zylindrischen Abschnitt 34c über.

Zwischen der Stirnwand 18a der Führungshülse 18 und einer zylindrischen Ausnehmung des Druckstücks 34 ist eine Schraubendruckfeder 38 eingesetzt, die das Druckstück 34 gegen den Stößel 22a des Elektromagneten 22 mit einer geringeren Kraft vorspannt.

In dem hülsenförmigen Abschnitt 16a des Kolbens 16 sind zwei Innennuten 16b, 16c eingearbeitet, in die die Kugeln 36 der Sperreinrichtung 20 bei über den Elektromagneten 22 bzw. den Stößel 22a betätigten Druckstück 34 radial nach außen einfahren können und den Kolben 16 formschlüssig über die Führungshülse 18 mit dem gehäusefesten Zylinder 14 verbinden.

In der gezeichneten Position "P aus" des Kolbens 16 rasten die Kugeln 36 in die Innennut 16c des Kolbens 16 und in der Position "P ein" in die Innennut 16b entsprechend ein.

Die Funktion der Sperreinrichtung 20 ist dabei jeweils wie folgt:
Es sei angenommen, über die Systemsteuerung wird die Stellvorrichtung 10 bzw. der Kolben 16 mit Hydraulikdruck beaufschlagt und somit in die "P aus" Position verfahren, wobei über die Stellstange 12 die Parksperre ausgelegt wird. Gleichzeitig (bzw. bevorzugt leicht zeitverzögert) wird der Elektromagnet 22 bestromt, wodurch das Druckstück 34 über den Stößel 22a auf der Zeichnung nach rechts gedrückt wird.

Dabei werden die Kugeln 36 (beispielsweise können 2, 3 oder 4 umfangsverteilte Kugeln verwendet sein) über den Konusabschnitt 34b des Druckstücks 34 radial nach außen gedrückt und fahren durch die Führungshülse 18 hindurch in die Innennut 16c ein. Mit der weiteren Verstellung des Druckstücks 34 liegt dieses an der Stirnwand 18a an, wobei das Druckstück 34 so bemessen ist, dass in dieser Stellung der zylindrische Abschnitt 34c die Kugeln 36 abstützt bzw. gegen eine Rückstellung radial nach innen blockiert.

Der Kolben 16 ist somit über die Sperreinrichtung 20 formschlüssig im Zylinder 14 gehalten, auch für den Fall eines unbeabsichtigten Ausfalls des Hydraulikdrucks im Zylinderraum 26.

Soll die Parkbremse regulär eingelegt werden, so wird der Hydraulikdruck im Zylinderraum 26 aufgehoben und gleichzeitig (bzw. bevorzugt davor oder danach) die Bestromung des Elektromagneten 22 unterbrochen, wodurch nunmehr mittels der Kraft P_{F} der Vorspannfeder die Parksperre eingelegt wird.

Zugleich bzw. bei Wiederinbetriebnahme des Fahrzeugs (Hydrauliksystem) wird der Elektromagnet 22 wieder zumindest temporär bestromt und damit wie vorbeschrieben die Sperreinrichtung 20 aktiviert, wobei die Kugeln 36 nunmehr in die Innennut 16b des Kolbens 16 einfahren und diesen wieder festsetzen.

Ein unbeabsichtigtes Lösen der Parksperre zum Beispiel durch einen Systemfehler mit gegebenenfalls schleichender Druckbeaufschlagung des Kolbens 16 der Stellvorrichtung 10 aufgrund eines defekten Steuerventils des Hydrauliksystems ist damit wiederum ausgeschlossen.

Der Kolben 16 der Stellvorrichtung 10 kann gegebenenfalls zweiteilig so ausgeführt sein, dass der hülsenförmige Abschnitt 16a mit den Innennuten 16b, 16c aus einem höherfestem Werkstoff, zum Beispiel aus Stahl und gegebenenfalls gehärtet ausgeführt ist, während der übrige Kolben 16 und gegebenenfalls die Stellstange 12 aus Leichtmetall gefertigt sein können, wobei die beiden Bauteile dann stoff- und/oder formschlüssig miteinander verbunden sind.

Die Führungshülse 18 und die Kugeln 36 als Sperrelemente sind bevorzugt aus Stahl und ebenfalls gehärtet ausgeführt, um unzulässige Flächenpressungen in der Sperrfunktion und bei Systemfehlern auszuschließen.

Die beschriebene, auf die Stellstange 12 wirkende Vorspannfeder mit der Kraft P_{F} kann abweichend vom Ausführungsbeispiel zwischen der Stirnwand 18a der Führungshülse 18 und der Stirnwand 16d des Kolbens 16 eingesetzt sein, wobei der hülsenförmige Abschnitt 16a des Kolbens 16 dann axial länger ausgeführt sein müsste. Die Stellvorrichtung 10 könnte dann eine Vormontageeinheit auch mit der integrierten Vorspannfeder bilden, die so in das Getriebegehäuse eingesetzt werden könnte.

In dem nicht dargestellten Hydrauliksystem zur Betätigung des Kolbens 16 kann gegebenenfalls ein Druckbegrenzungsventil (nicht dargestellt) vorgesehen sein, dass den auf den Kolben wirkenden Hydraulikdruck auf einen definierten Druckwert begrenzt, um bei einem Systemfehler eine Beschädigung der aktivierten Sperreinrichtung 20 auszuschließen. Das Druckbegrenzungsventil kann ein einfaches Ventil mit einer federvorgespannten Kugel sein, das bei einem unzulässigem Überdruck öffnet und Hydraulikflüssigkeit in eine angeschlossene Rücklaufleitung des Hydrauliksystems bzw. direkt in den umgebenden Bauraum (Ölsumpf) abführt. Bevorzugt kann das Druckbegrenzungsventil ebenfalls in die Stellvorrichtung 10 bzw. in den Zylinder 14 integriert sein.

## Patentansprüche

1. Stellvorrichtung für eine Betätigung einer Parksperre in einem Getriebe, insbesondere für automatische Getriebe in Kraftfahrzeugen, mit einem in einem Zylinder (14) geführten Kolben (16) mit einer Stellstange (12), wobei über die Stellstange (12) eine Sperrklinke für ein Parksperrenrad im Getriebe betätigbar ist, wobei der Kolben (16) hydraulisch beaufschlagbar die Parksperre entgegen der Kraft (P_{F}) einer integrierten Vorspannfeder auslegt und im drucklosen Zustand die Vorspannfeder die Parksperre einlegt und wobei ferner eine durch einen Elektromagneten (22) betätigbare Sperreinrichtung (20) vorgesehen ist, die über radial ausfahrbare Sperrelemente (36) den Kolben (16) relativ zu einer am Zylinder (14) befestigten Führungshülse (18) festlegt und die den Kolben (16) in der der ausgelegten Position (Paus) der Parksperre entsprechenden Stellung formschlüssig festlegt, wobei der Kolben (16) einen hülsenförmigen Abschnitt (16a) aufweist und die Sperreinrichtung (20) mit dem Elektromagneten (22) und der Führungshülse (18) innerhalb des hülsenförmigen Abschnitts (16a) angeordnet ist, **dadurch gekennzeichnet, dass** über die Sperreinrichtung (20) der Kolben (16) auch in der dem eingelegten Zustand der Parksperre entsprechenden Stellung (Pein) formschlüssig festlegbar ist, und dass in dem hülsenförmigen Abschnitt (16a) des Kolbens (16) zwei den Kolbenendstellungen entsprechende Innennuten (16b, 16c) eingearbeitet sind, in die die Sperrelemente (36) durch Ausnehmungen (18c) der Führungshülse (18) hindurch bei bestromten Elektromagneten (22) formschlüssig einfahren, wobei die beiden Kolbenendstellungen der ausgelegten (Paus) und der eingelegten Position (Pein) der Parksperre entsprechen.

2. Stellvorrichtung nach den vorhergehenden Ansprüchen, **dadurch gekennzeichnet, dass** die Sperrelemente Kugeln (36) sind, die über ein einen Konusabschnitt (34b) aufweisendes und innerhalb der Führungshülse (18) geführtes Druckstück (34) betätigbar sind, wobei ein Stößel (22a) des Elektromagneten (22) das Druckstück (34) beaufschlagt.

3. Stellvorrichtung nach Anspruch 2, **dadurch gekennzeichnet, dass** eine Schraubendruckfeder (38) vorgesehen ist, die das Druckstück (34) gegen den Stößel (22a) mit einer Kraft vorspannt.

4. Stellvorrichtung nach Anspruch 3, **dadurch gekennzeichnet, dass** ein Führungsabschnitt (34a) des Druckstückes (34) vorgesehen ist, der die Schraubendruckfeder (38) aufnimmt und im betätigten Zustand an einer Stirnwand (18a) der Führungshülse (18) anliegt und in diesem Zustand die Kugeln (36) an einem zylindrischen Endabschnitt (34c) des Druckstücks (34) anliegen.

5. Stellvorrichtung nach einem der vorhergehenden Ansprüche, **dadurch gekennzeichnet, dass** die Führungshülse (18) und das Gehäuse des Elektromagneten (22) mittels einer oder mehrerer Schrauben (30) an der freien Stirnseite des Zylinders (14) befestigt sind.

6. Stellvorrichtung nach Anspruch 4, **dadurch gekennzeichnet, dass** die die Parksperre einlegende Vorspannfeder zwischen der Stirnwand (18a) der Führungshülse (18) und einer Stirnwand (16d) des hülsenförmigen Abschnitts (16a) des Kolbens (16) angeordnet ist.

## Claims

1. Actuator for an activation of a parking lock in a gearing mechanism, in particular for automatic gears in motor vehicles, having a piston (16), guided in a cylinder (14), having an adjusting rod (12), wherein by means of the adjusting rod (12) a retaining pawl for a parking ratchet wheel in the gearing mechanism can be operated, wherein the piston (16), which can be hydraulically actuated, disengages the parking lock against the force (P_{F}) of an integrated preload spring and in depressurised state the preload spring engages the parking lock and wherein furthermore a locking mechanism (20) which can be actuated by means of an electromagnet (22) is provided, which by means of radially extendable locking elements (36) fixes the piston (16) relatively to a guide sleeve (18) fastened on the cylinder (14) and which fixes in a form-fitting manner at the piston (16) in the setting corresponding to the disengaged position (Paus) of the parking lock, wherein the piston (16) has a sleeve-shaped portion (16a) and the locking mechanism (20) with the electromagnets (22) and the guide sleeve (18) is disposed within the sleeve-shaped portion (16a), **characterised in that** by means of the locking mechanism (20) the piston (16) can be form-fittingly fixed also in the setting (Pein) corresponding to the engaged state of the parking lock, and that in the sleeve-shaped portion (16a) of the piston (16) are incorporated two inner grooves (16b, 16c) corresponding to the piston end settings, into which the locking elements (36) engage form-fittingly through recesses (18c) of the guide sleeve (18) when current flows through the electromagnets (22), wherein the two piston end settings correspond to the disengaged (Paus) and the engaged position (Pein) of the parking lock.

2. Actuator according to the preceding claims, **characterised in that** the locking elements are spheres (36), which can be actuated by means of a pressure piece (34) having a cone section (34b) and guided within the guide sleeve (18), wherein a tappet (22a) of the electromagnet (22) charges the pressure piece (34).

3. Actuator according to claim 2, **characterised in that** a coil compression spring (38) is provided which biases the pressure piece (34) against the tappet (22a) with a force.

4. Actuator according to claim 3, **characterised in that** a guide portion (34a) of the pressure piece (34) is provided, which accommodates the coil compression spring (38) and in the actuated state abuts on a front wall (18a) of the guide sleeve (18) and in this state the spheres (36) abut on a cylindrical end portion (34c) of the pressure piece (34).

5. Actuator according to any of the preceding claims, **characterised in that** the guide sleeve (18) and the housing of the electromagnet (22) are fastened by means of one or more screws (30) to the free front side of the cylinder (14).

6. Actuator according to claim 4, **characterised in that** the biasing spring engaging the parking lock is disposed between the front wall (18a) of the guide sleeve (18) and a front wall (16d) of the sleeve-shaped portion (16a) of the piston (16).

## Revendications

1. Dispositif de réglage pour un actionnement d'un frein de stationnement dans une boîte de vitesses, en particulier pour boîte de vitesses automatique dans des véhicules automobiles, avec un piston (16), guidé dans un cylindre (14), avec une tige de réglage (12), dans lequel un cliquet d'arrêt destiné à une roue de frein de stationnement dans la boîte de vitesses est actionnable par l'intermédiaire de la tige de réglage (12), dans lequel le piston (16) pouvant être alimenté hydrauliquement dégage le frein de stationnement contre la force (P_{F}) d'un ressort de précontrainte intégré et, dans l'état non soumis à une pression, le ressort de précontrainte engage le frein de stationnement et dans lequel il est prévu en outre un dispositif d'arrêt (20) qui est actionnable par un électroaimant (22), qui immobilise le piston (16) par rapport à un manchon de guidage (18), fixé au cylindre (14), par l'intermédiaire d'éléments d'arrêt (36) déployables radialement et qui immobilise par concordance de forme le piston (16) dans la position correspondant à la position dégagée (Paus) du frein de stationnement, dans lequel le piston (16) comporte un tronçon (16a) en forme de manchon et le dispositif d'arrêt (20) avec l'électroaimant (22) et avec le manchon de guidage (18) est agencé à l'intérieur du tronçon (16a) en forme de manchon,
**caractérisé en ce que**, par l'intermédiaire du dispositif d'arrêt (20), le piston (16) peut aussi être immobilisé par concordance de forme dans la position (Pein) correspondant à l'état engagé du frein de stationnement et **en ce que** sont réalisées dans le tronçon (16a) en forme de manchon du piston (16) deux rainures intérieures (16b, 16c) qui correspondent aux positions terminales de piston et dans lesquelles les éléments d'arrêt (36) pénètrent par concordance de forme à travers des évidements (18c) du manchon de guidage (18) lorsque les électroaimants (22) sont alimentés en courant, dans lequel les deux positions terminales de piston correspondent à la position dégagée (Paus) et à la position engagée (Pein) du frein de stationnement.

2. Dispositif de réglage selon les revendications précédentes, **caractérisé en ce que** les éléments d'arrêt sont des billes (36) qui sont actionnables par l'intermédiaire d'une pièce de pression (34) comportant un tronçon conique (34b) et guidée à l'intérieur du manchon de guidage (18), dans lequel une tige (22a) de l'électroaimant (22) agit sur la pièce de pression (34).

3. Dispositif de réglage selon la revendication 2, **caractérisé en ce qu'il** est prévu un ressort de pression cylindrique (38) qui précontraint avec une force la pièce de pression (34) contre la tige (22a).

4. Dispositif de réglage selon la revendication 3, **caractérisé en ce qu'il** est prévu un tronçon de guidage (34a) de la pièce de pression (34) qui loge le ressort de pression cylindrique (38) et qui s'appuie dans l'état actionné contre une paroi frontale (18a) du manchon de guidage (18) et, dans cet état, les billes (36) s'appuient contre un tronçon terminal cylindrique (34c) de la pièce de pression (34).

5. Dispositif de réglage selon l'une quelconque des revendications précédentes, **caractérisé en ce que** le manchon de guidage (18) et l'armature de l'électroaimant (22) sont fixés au côté frontal libre du cylindre (14) au moyen d'une ou plusieurs vis (30).

6. Dispositif de réglage selon la revendication 4, **caractérisé en ce que** le ressort de précontrainte engageant le frein de stationnement est agencé entre la paroi frontale (18a) du manchon de guidage (18) et une paroi frontale (16d) du tronçon en forme de manchon (16a) du piston (16).
